# EUROPÄISCHE PATENTSCHRIFT

(11) **EP 1 034 103 B1**
(45) Veröffentlichungstag und Bekanntmachung des Hinweises auf die Patenterteilung: **01.02.2006**
(21) Anmeldenummer: 98919200.0
(22) Anmeldetag: 01.04.1998
(51) Int. Cl.: B60T 7/12, B60T 11/10, B60W 10/04, B60W 10/18, B60T 8/48

(54) **AUTOMATISCHES BREMSSYSTEM FÜR KRAFTFAHRZEUGE**
AUTOMATIC BRAKING SYSTEM FOR MOTOR VEHICLES
SYSTEME DE FREINAGE AUTOMATIQUE POUR VEHICULES

(30) Priorität: 03.04.1997 DE 19713715
(43) Veröffentlichungstag der Anmeldung: 13.09.2000
(73) Patentinhaber: Continental Teves AG & Co. oHG, 60441 Frankfurt am Main (DE)
(72) Erfinder: KRIEG, Bernd, D-63633 Birstein (DE); DUSIL, Vladimir, D-64347 Griesheim (DE)
(86) Internationale Anmeldenummer: PCT/EP1998/001879
(87) Internationale Veröffentlichungsnummer: WO 1998/043857

(56) Entgegenhaltungen:
- WO-A-95/01898
- DE-A- 4 425 578
- DE-C- 4 413 172
- FR-A- 2 174 777
- GB-A- 2 250 070
- US-A- 4 146 108

## Beschreibung

Die Erfindung betrifft ein automatisches Bremssystem für Kraftfahrzeuge mit den Fahrzeugrädern zugeordneten Radbremsen sowie mit einer elektronischen Steuereinheit, der mindestens ein Steuersignal einer Einrichtung zum Erfassen der Wegnahme einer am Gaspedal, Gashebel oder Gasdrehgriff des Kraftfahrzeugs wirkenden, durch den Fahrer aufgebrachten Betätigungskraft zugeführt wird, wobei Mittel vorgesehen sind, die beim Auftreten des Steuersignals ein Vorfüllen der Radbremsen gewährleisten.

Ein derartiges Bremssystem ist z. B. aus der GB-A-2 250 070 bekannt. Bei dem vorbekannten Bremssystem wird ein günstig rasches Ansprechen sämtlicher Radbremsen des Fahrzeuges und eine Minimierung des Lüftspiels bzw. des Leerweges des Bremspedals dadurch erreicht, dass die Radbremsen in einer bremsungsbedürftigen Situation bei Erfüllen von bestimmten Kriterien, beispielsweise bei einer schnellen Zurücknahme des Fahrpedals bei relativ hoher Geschwindigkeit, durch Ansteuern einer Pumpe vorgefüllt werden. Das Vorfüllen erfolgt somit unabhängig von der Absicht des Fahrzeugführers, die Bremsen tatsächlich zu betätigen. Der in der Bremsentechnik übliche Begriff "Vorfüllen" bezeichnet eine Aktivierung der den Radbremsen vorgeschalteten Bremsanlage, bei der eine Erhöhung des hydraulischen Druckes stattfindet, die lediglich zum Anlegen der Bremsbeläge führt und keine Fahrzeugverzögerung zur Folge hat. Der erwähnten Veröffentlichung sind jedoch keine Hinweise entnehmbar, wie der Vorfüllvorgang zum funktionsgerechten Zeitpunkt beendet wird.

Es ist daher Aufgabe der vorliegenden Erfindung ein automatisches Bremssystem der eingangs genannten Gattung vorzuschlagen, das eine funktionsgerechte Beendigung des Vorfüllvorgangs ermöglicht. Gleichzeitig sollen die Funktionssicherheit des vorgeschlagenen Bremssystems erhöht sowie seine Verwendungsmöglichkeiten erweitert werden.

Diese Aufgabe wird erfindungsgemäß dadurch gelöst, dass der elektronischen Steuereinheit ein zweites Steuersignal zugeführt wird, das von einer Einrichtung erzeugt wird, die den Zeitpunkt der Berührung zwischen Fahrerfuß oder Fahrerhand und Bremspedal erfasst, und dass beim Ausbleiben des zweiten Steuersignals die Vorfüllung unterbrochen wird.

Zur Konkretisierung des Erfindungsgedankens ist vorgesehen, dass das Steuersignal den Lastzustand des Fahrzeugmotors oder die Geschwindigkeit der bei einer Betätigungskraft-Wegnahme auftretenden Bewegung des Gaspedals oder dgl. repräsentiert. Es ist jedoch auch denkbar, den Abfall der Motordrehzahl als Steuersignal zu verwenden, das jedoch durch Massenträgheit rotierender und oszillierender Motorkomponenten beeinflusst wird und demnach eher als Fail-Safe-Signal Verwendung findet.

Bei vorteilhaften Weiterbildungen des Erfindungsgegenstandes kann das Steuersignal von einem elektronischen Steuergerät eines programmgesteuerten Automatikgetriebes erzeugt werden oder eine Änderung des im Saugrohr des Motors herrschenden Druckes bzw. des im Abgassystem herrschenden Gegendruckes repräsentieren. Der Motorsaugdruck unterliegt dabei keiner nennenswerten Verzögerungsschwelle im Ansprechverhalten, so dass beispielsweise mittels eines Druckschalters ein plötzliches Lösen des Gaspedals oder dgl. schnell und zuverlässig erkannt wird.

Bei anderen vorteilhaften Ausführungen der Erfindung ist vorgesehen, dass das Steuersignal von einem in einem elektronischen Steuergerät einer Kraftstoffeinspritzanlage abgelegten Kennfeld oder einem in einer elektronischen Steuereinheit der Motorzündung abgelegten Kennfeld abgeleitet wird. Als Steuersignale eignen sich hierzu besonders vorteilhaft das in Verbindung mit einem bei Fahrzeugen mit Schubabschaltung erzeugte Kraftstoff-Einspritzunterbrechungssignal oder ein Zündwinkeländerungssignal, das z.B. bei einer plötzlichen Zündwinkelverstellung zur "Spätzündung" verwendet werden kann.

Im Rahmen der vorliegenden Erfindung sind selbstverständlich auch weitere Ausführungsformen denkbar, bei denen das Steuersignal von einem Ladedrucksensor, einem vorzugsweise mit der Steuereinheit der Motorzündung zusammenwirkenden Drucksensor oder von einem Drosselklappensensor bzw. -schalter ausgelöst wird, der die Verstellung der Drosselklappe des Fahrzeugmotors erfasst.

Eine andere Alternative des Erfindungsgegenstandes sieht vor, dass das Steuersignal von einem einer Kraftstoff-Einspritzpumpe zugeordneten Leerlaufschalter ausgelöst wird.

Eine besonders vorteilhafte Weiterbildung des Erfindungsgegenstandes besteht darin, dass das Bremssystem als hydraulisches Bremssystem ausgebildet ist und dass die Mittel zum Vorfüllen der Radbremsen durch eine hydraulische Vorladepumpe oder durch einen unabhängig vom Fahrerwillen ansteuerbaren Bremskraftverstärker gebildet sind. Der Bremskraftverstärker ist dabei vorzugsweise als ein Unterdruckbremskraftverstärker ausgebildet, dessen Steuerventil elektromechanisch betätigbar ist.

Dabei ist es besonders vorteilhaft, wenn bei einer Weiterbildung des Erfindungsgegenstandes Mittel vorgesehen sind, die die Zeitdauer zwischen dem Beginn des Vorfüllvorganges und dem Auftreten des zweiten Steuersignals erfassen und den erfassten Wert mit einem vorgegebenen Wert vergleichen.

Um den Fahrerwunsch hinsichtlich einer nicht beabsichtigten Fahrzeugabbremsung zu erfassen ist vorgesehen, dass beim Überschreiten des vorgegebenen Wertes die Vorfüllung unterbrochen wird.

Um eine Unterstützung des Fahrers, insbesondere bei so genannten Panikbremsungen, zu gewährleisten, sieht die Erfindung vor, dass beim Unterschreiten des vorgegebenen Wertes eine Vollbremsung erfolgt.

Dabei ist es schließlich besonders sinnvoll, wenn die elektronische Steuereinheit mit einem Motor-Steuergerät oder mit elektrischen Schaltkreisen eines ABS/ARS-Steuergerätes verknüpft ist. Bei entsprechender Miniaturisierung der Erfindung kann diese schaltungstechnisch in vorgenannten Steuergeräten integriert sein.

Die Erfindung wird in der nachfolgenden Beschreibung eines Ausführungsbeispiels unter Bezugnahme auf die beiliegende Zeichnung näher erläutert, in der Teile, die für die Erfindung unerheblich sind, weggelassen wurden. In der Zeichnung zeigt:
- Fig. 1: eine schematische Darstellung des erfindungsgemäßen Bremssystems, und
- Fig. 2: eine Ausführung der elektronischen Steuereinheit nach Fig. 1.

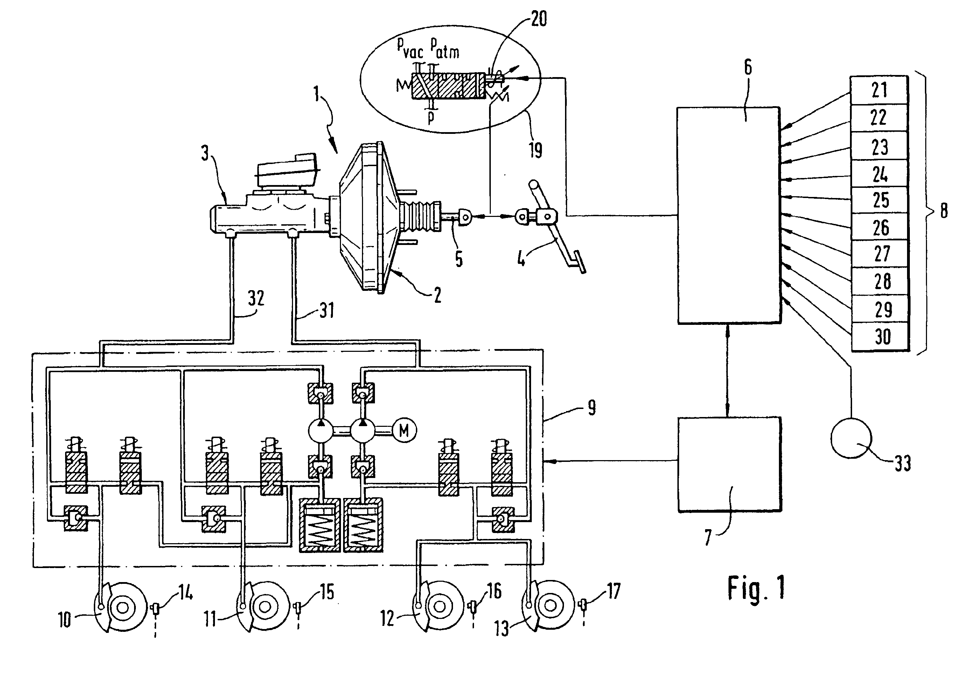

Das in der Zeichnung gemäß Fig. 1 dargestellte automatische Bremssystem nach der Erfindung besteht im wesentlichen aus einer hydraulischen Bremsdruckquelle bzw. einer Betätigungseinheit 1, einer elektronischen Steuereinheit 6, einer Einrichtung 8 zum Erzeugen von Steuersignalen, die der elektronischen Steuereinheit 6 zugeführt werden, sowie den einzelnen Rädern eines vierrädrigen Fahrzeugs zugeordneten Radbremsen 10 - 13, die an die Betätigungseinheit 1 angeschlossen sind. Zwischen Betätigungseinheit 1 und Radbremsen 10 - 13 ist vorzugsweise ein Hydroaggregat bzw. Druckmodulator 9 geschaltet, der eine radindividuelle Regelung des den Radbremsen 10 - 13 zugeführten hydraulischen Druckes in Abhängigkeit von Ausgangssignalen eines mit der elektronischen Steuereinheit 6 zusammenwirkenden Reglers 7 ermöglicht. Denkbar ist jedoch auch eine Ausführung, bei der die elektronische Steuereinheit 6 als Bestandteil des Reglers 7 ausgebildet bzw. in diesem integriert ist. Jedem der nicht gezeigten Fahrzeugräder ist je ein Radsensor 14,15,16,17 zugeordnet, dessen der Radgeschwindigkeit entsprechendes Ausgangssignal dem Regler 7 zugeführt wird. Die Betätigungseinheit 1 besteht ihrerseits aus einem mittels eines Betätigungspedals 4 betätigbaren pneumatischen Bremskraftverstärker, vorzugsweise einem Unterdruckbremskraftverstärker 2, dem ein Hauptbremszylinder 3, vorzugsweise ein Tandemhauptzylinder, nachgeschaltet ist, dessen nicht gezeigte Druckräume über hydraulische Leitungen 31,32 mit dem Druckmodulator 9 in Verbindung stehen. An das Betätigungspedal 4 ist eine Betätigungsstange 5 angekoppelt, die eine Betätigung eines lediglich schematisch dargestellten Steuerventils 19 ermöglicht, das den Aufbau eines pneumatischen Differenzdruckes im Gehäuse des Unterdruckbremskraftverstärkers 2 steuert. Ein Elektromagnet 20 ermöglicht dabei eine Fremdbetätigung des Steuerventils 19.

Wie Fig. 1 weiter zu entnehmen ist, kann die Einrichtung 8 zum Erzeugen von Steuersignalen aus mehreren, den Lastzustand des Fahrzeugmotors erfassenden Sensoren bzw. Einrichtungen (Signalgebern) bestehen, deren Ausgangssignale einzeln oder in Kombination in der elektronischen Steuereinheit 6 verarbeitet werden. So ist mit dem Bezugszeichen 21 ein erster Sensor bezeichnet, der die Verstellung der Drosselklappe des Fahrzeugmotors erfaßt. Der erste Sensor 21 kann dabei vorzugsweise als ein die Bewegung der Drosselklappe kontinuierlich erfassendes Potentiometer, das ein analoges Signal liefert, oder als ein digital arbeitendes Drosselklappenschalter ausgeführt werden, der zumindest die Schließstellung der Drosselklappe sensiert. Ein zweiter Sensor 22 liefert eine dem Abfall der Motordrehzahl entsprechende Information und kann z. B. als ein Kurbelwellen-Drehzahlsensor ausgeführt sein. Mit den Bezugszeichen 23, 24,25 und 26 sind Drucksensoren versehen, die Änderungen des im Saugrohr des Fahrzeugmotors herrschenden Druckes, des im Abgassystem des Fahrzeugmotors herrschenden Gegendruckes, des Ladedruckes eines aufgeladenen Verbrennungsmotors bzw. des ein Zündsteuergerät beeinflußenden pneumatischen Druckes erfassen. Ein weiterer Signalgeber 27 liefert ein Steuersignal, das vom nicht gezeigten Steuergerät eines programmgesteuerten Automatikgetriebes ausgelöst wird. Mit den Bezugszeichen 28 und 29 sind Signalgeber versehen, die es ermöglichen, Steuersignale von in einem Steuergerät einer Kraftstoffeinspritzanlage bzw. einem Steuergerät der Motorzündung abgelegten Kennfeldern abzuleiten. Dabei löst der erstgenannte Signalgeber 28 ein Steuersignal aus, das dem Kraftstoff-Einspritzunterbrechungssignal entspricht, während der Signalgeber 29 ein Signal liefert, das eine Zündwinkeländerung repräsentiert. Denkbar ist jedoch auch eine Ausführung der Erfindung, bei der der Signalgeber 28 durch einen einer Kraftstoff-Einspritzpumpe zugeordneten Leerlaufschalter gebildet ist. Die Ausgangssignale sämtlicher vorhin genannten Sensoren bzw. Signalgeber entsprechen somit Geschwindigkeitsänderungen der bei einer Wegnahme der auf das Gaspedal des Fahrzeuges einwirkenden Betätigungskraft auftretenden Bewegung.

Wie der vorhergehenden Beschreibung eindeutig zu entnehmen ist, ist das dargestellte Bremssystem als hydraulisches Bremssystem ausgebildet, wobei der Vorfüllvorgang an den Radbremsen 10 - 13 durch eine von einem oder mehreren der vorhin erwähnten Steuersignale abhängige Fremdansteuerung des Unterdruckbremskraftverstärkers 2 durchgeführt wird. Selbstverständlich ist die Erfindung auf die Verwendung des Unterdruckbremskraftverstärkers 2 nicht beschränkt. So ist im Rahmen der vorligenden Erfindung auch denkbar, zum Vorfüllen der Radbremsen eine mittels der elektronischen Steuereinheit ansteuerbare hydraulische Pumpe oder andere geeignete technische Mittel, insbesondere Druckerzeuger mit alternativen Stellantrieben (Stellmotoren oder dgl.) zu verwenden.

Aus Fig. 1 geht weiterhin hervor, daß eine Einrichtung 30 vorgesehen ist, die den Zeitpunkt der Berührung zwischen Fahrerfuß und Betätigungspedal 4 erfaßt und die ein weiteres Steuersignal erzeugt, das der elektronischen Steuereinheit 6 zugeführt wird. Durch geeignete Softwaremaßnahmen ist dabei gewährleistet, daß beim Ausbleiben des erwähnten Steuersignals der Vorfüllvorgang unterbrochen wird. Die Einrichtung 30 besteht z. B. aus einem die Bewegung des Betätigungspedals 4 direkt erfassenden, an ich bekannten mechanischen Bremslichtschalter oder einem an einen der Druckräume des Hauptbremszylinders 3 angeschlossenen Drucksensor, der eine Sensierung der Pedalbetätigung mittels der Druckerhöhung im Hauptbremszylinder 3 ermöglicht.

Um den Erfindungsgegenstand zur Unterstützung des Fahrzeugführers beispielsweise bei sog. Panikbremsungen verwenden zu können ist schließlich ein Zeitmeßglied 33 vorgesehen, das die Zeitdauer zwischen dem Beginn der Vorfüllung und dem Auftreten des Ausgangssignals der Einrichtung 30 ermittelt. Der ermittelte Wert wird mit einem in der elektronischen Steuereinheit 6 abgespeicherten, vorgegebenen Wert verglichen, wobei in Abhängigkeit vom Vergleichsergebnis entschieden wird, ob die Vorfüllung unterbrochen werden soll oder ob eine schnelle Druckerhöhung zur Unterstützung des Fahrers bzw. eine Vollbremsung eingeleitet wird. Die Unterbrechung des Vorfüllvorgangs erfolgt dann, wenn die ermittelte Zeitdauer den vorgegebenen Wert überschreitet, während die Druckerhöhung bzw. Vollbremsung durchgeführt wird, wenn die Zeitdauer kürzer ist als der vorgegebene Wert.

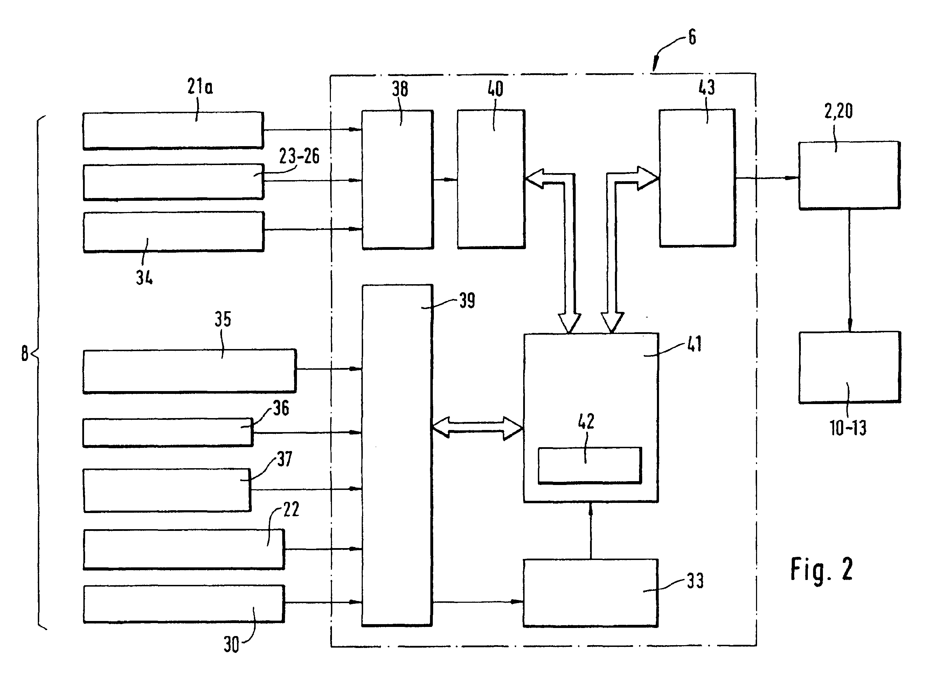

Fig. 2 zeigt insbesondere den Aufbau der im Zusammenhang mit Fig. 1 beschriebenen elektronischen Steuereinheit 6, die im wesentlichen eine erste sowie eine zweite Eingangsschnittstelle 38, 39, einen der ersten Eingangsschnittstelle 38 zugeordneten A/D-Wandler 40, einen Mikroprozessor 41 mit einer Speichereinrichtung 42 sowie eine Endstufe 43 aufweist, deren Ausgangssignale als Ansteuersignale für den im Zusammenhang mit Fig. 1 erwähnten, fremdansteuerbaren Bremskraftverstärker oder die Vorfüllpumpe verwendet werden. Der ersten Eingangsschnittstelle 38 werden als Eingangssignale z. B. die Analogsignale des Drosselklappenpotentiometers 21a, eines der vorhin erwähnten Drucksensoren 23 bis 26 sowie eines den Ladezustand der Fahrzeugbatterie überwachenden Signalgebers 34 zugeführt, die nach entsprechender Verarbeitung im A/D-Wandler 40 dem Mikroprozessor 41 zur Verfügung gestellt werden.

Der zweiten Eingangsschnittstelle 39 werden im in Fig. 2 dargestellten Beispiel die Digitalsignale des vorhin erwähnten Motordrehzahl- bzw. Kurbelwellendrehzahlsensors 22, der ebenso bereits erwähnten Einrichtung 30, eines bei einem nicht gedrosselten Motor vorgesehenen Leerlaufschalters 36, eines die Fahrzeuggeschwindigkeit erfassenden Tachometers 37, sowie eines Geschwindigkeitsreglers 35 zugeführt, die an den Mikroprozessor 41 weitergeleitet werden. Das Ausgangssignal des Geschwindigkeitsreglers 35 dient dabei vorzugsweise der Erhöhung der Sicherheit des vorgeschlagenen Systems bzw. dessen Abschaltung. Im Rahmen der vorliegenden Erfindung ist z. B. auch eine redundante Ausführung der elektronischen Steuereinheit 6 denkbar. Das Signal des Leerlaufschalters 36 eignet sich bevorzugt zur Bestätigung der Gaspedal-Lösestellung und kann bei Bedarf zur Erkennung des Fahrerwillens mittels des vorhin erwähnten Zeitschaltglieds 33 zu einer Plausibilitätsprüfung im Mikroprozessor 41 verknüpft werden.

Beim Auftreten eines oder mehrerer der vorhin erwähnten Steuersignale vergleicht die elektronische Steuereinheit 6 die sich daraus ergebende Geschwindigkeit der Gaspedalbewegung, die bei einer schnellen Wegnahme der Betätigungskraft stattfindet, mit einem vorgegebenen, in der Speichereinrichtung 42 abgelegten Wert. Bei einem Unterschreiten dieses Schwellenwertes wird über die Endstufe 43 ein Steuersignal an den Elektromagneten 20 des vorzugsweise analog ansteuerbaren Bremskraftverstärkers 2 abgegeben, dessen vom Fahrerwillen unabhängige Ansteuerung eine begrenzte Druckerhöhung in dem ihm nachgeschalteten Hauptbremszylinder 3 bewirkt. Die Druckerhöhung im Hauptbremszylinder 3 hat ein "Vorfüllen" der daran angeschlossenen Radbremsen 10 bis 13 bzw. ein Anlegen der nicht gezeigten Bremsbeläge zur Folge, bei dem jedoch keine Fahrzeugverzögerung stattfindet. Das Zeitmeßglied 33 ermittelt dabei die Zeitdauer zwischen dem Beginn des automatisch ausgelösten Vorfüllvorgangs und dem Zeitpunkt der Berührung zwischen Fahrerfuß und Bremspedal. Wird diese so definierte Totzeit überschritten, so wird der Elektromagnet 20 des Bremskraftverstärkers 2 wieder deaktiviert, um den Fahrerwunsch hinsichtlich einer nicht beabsichtigten Fahrzeugabbremsung zu erfassen. Sonst wird der Vorfüllvorgang durch eine Betätigung des Bremspedals 4 durch den Fahrzeugführer beendet, die von der Einrichtung 30 bzw. dem Bremslichtschalter der elektronischen Steuereinheit 6 gemeldet wird.

Wird dagegen bei dem vorhin beschriebenen Zeitvergleich erkannt, daß der vorgegebene Zeitwert unterschritten wird, d.h., daß eine sehr schnelle Bewegung des Fahrerfusses vom nicht gezeigten Gaspedal auf das Bremspedal 4 zu stattfindet, so wird der Bremskraftverstärker 2 im Sinne eines schnellen Druckaufbaus angesteuert, der eine Unterstützung des Fahrers beim Umsetzen seines Verzögerungswunsches darstellt und der sogar eine Vollbremsung zur Folge haben kann. Der durch die automatische Fremdansteuerung des Bremskraftverstärkers 2 aufgebrachte Druck ist dann selbstverständlich höher als der Bremsdruck, der sich aus der Bremspedalstellung ergibt.

## Patentansprüche

1. Automatisches Bremssystem für Kraftfahrzeuge mit den Fahrzeugrädern zugeordneten Radbremsen sowie mit einer elektronischen Steuereinheit (6), der mindestens ein erstes Steuersignal einer Einrichtung zum Erfassen der Wegnahme einer am Gaspedal, Gashebel oder Gasdrehgriff des Kraftfahrzeugs wirkenden, durch den Fahrer aufgebrachten Betätigungskraft zugeführt wird, wobei Mittel (8 bzw. 21 - 29, 34 - 37)vorgesehen sind, die beim Auftreten des ersten Steuersignals ein Vorfüllen der Radbremsen (10 - 13) gewährleisten, **dadurch gekennzeichnet, dass** der elektronischen Steuereinheit (6) ein zweites Steuersignal zugeführt wird, das von einer Einrichtung (30) erzeugt wird, die den Zeitpunkt der Berührung zwischen Fahrerfuß und Bremspedal (4) erfasst, und dass beim Ausbleiben des zweiten Steuersignals die Vorfüllung unterbrochen wird.

2. Bremssystem nach Anspruch 1, **dadurch gekennzeichnet, dass** das erste Steuersignal den Lastzustand des Fahrzeugmotors repräsentiert.

3. Bremssystem nach Anspruch 2, **dadurch gekennzeichnet, dass** das erste Steuersignal den Abfall der Motordrehzahl repräsentiert.

4. Bremssystem nach Anspruch 2, **dadurch gekennzeichnet, dass** das erste Steuersignal die Geschwindigkeit der bei einer Betätigungskraft-Wegnahme auftretenden Bewegung des Gaspedals repräsentiert.

5. Bremssystem nach Anspruch 4, **dadurch gekennzeichnet, dass** das erste Steuersignal von einem Steuergerät eines programmgesteuerten Automatikgetriebes erzeugt wird.

6. Bremssystem nach Anspruch 2, **dadurch gekennzeichnet, dass** das erste Steuersignal eine Änderung des im Saugrohr des Motors herrschenden Druckes repräsentiert.

7. Bremssystem nach Anspruch 2, **dadurch gekennzeichnet, dass** das erste Steuersignal eine Änderung eines in einem Abgassystem herrschenden Gegendruckes repräsentiert.

8. Bremssystem nach Anspruch 2, **dadurch gekennzeichnet, dass** das erste Steuersignal von einem in einem Steuergerät einer Kraftstoffeinspritzanlage abgelegten Kennfeld abgeleitet wird.

9. Bremssystem nach Anspruch 2, **dadurch gekennzeichnet, dass** das erste Steuersignal von einem in einem Steuergerät der Motorzündung abgelegten Kennfeld abgeleitet wird.

10. Bremssystem nach Anspruch 8, **dadurch gekennzeichnet, dass** als erstes Steuersignal das Kraftstoff-Einspritzunterbrechungssignal verwendet wird.

11. Bremssystem nach Anspruch 9, **dadurch gekennzeichnet, dass** als erstes Steuersignal ein eine Zündwinkeländerung repräsentierendes Signal verwendet wird.

12. Bremssystem nach Anspruch 3, **dadurch gekennzeichnet, dass** das erste Steuersignal von einem Kurbelwellen-Drehzahlsensor (22) erzeugt wird.

13. Bremssystem nach Anspruch 6, **dadurch gekennzeichnet, dass** das erste Steuersignal von einem Ladedrucksensor (25) erzeugt wird.

14. Bremssystem nach Anspruch 6, **dadurch gekennzeichnet, dass** das erste Steuersignal von einem vorzugsweise mit einem Zündsteuergerät zusammenwirkenden Drucksensor (26) erzeugt wird.

15. Bremssystem nach Anspruch 3, **dadurch gekennzeichnet, dass** das erste Steuersignal von einem Drosselklappensensor bzw. - schalter (21, 21a) erzeugt wird, der Verstellungen der Drosselklappe des Fahrzeugmotors erfasst.

16. Bremssystem nach Anspruch 3, **dadurch gekennzeichnet, dass** das erste Steuersignal von einem einer Kraftstoff-Einspritzpumpe zugeordneten Leerlaufschalter (36) erzeugt wird.

17. Bremssystem nach einem der vorhergehenden Ansprüche, **dadurch gekennzeichnet, dass** das Bremssystem als hydraulisches Bremssystem ausgebildet ist und dass die Mittel zum Vorfüllen der Radbremsen durch eine hydraulische Vorladepumpe gebildet sind.

18. Bremssystem nach einem der vorhergehenden Ansprüche, **dadurch gekennzeichnet, dass** das Bremssystem als hydraulisches Bremssystem ausgebildet ist und dass die Mittel zum Vorfüllen der Radbremsen (10 - 13) durch einen unabhängig vom Fahrerwillen ansteuerbaren Bremskraftverstärker (2) gebildet sind.

19. Bremssystem nach Anspruch 18, **dadurch gekennzeichnet, dass** der Bremskraftverstärker als ein Unterdruckbremskraftverstärker (2) ausgebildet ist, dessen Steuerventil (19) elektromechanisch betätigbar ist.

20. Bremssystem nach einem der vorhergehenden Ansprüche, **dadurch gekennzeichnet, dass** Mittel (33) vorgesehen sind, die die Zeitdauer zwischen dem Beginn des Vorfüllvorganges und dem Auftreten des zweiten Steuersignals erfassen und den erfassten Wert mit einem vorgegebenen Wert vergleichen.

21. Bremssystem nach Anspruch 20, **dadurch gekennzeichnet, dass** beim Überschreiten des vorgegebenen Wertes die Vorfüllung unterbrochen wird.

22. Bremssystem nach Anspruch 20, **dadurch gekennzeichnet, dass** beim Unterschreiten des vorgegebenen Wertes eine schnelle Druckerhöhung erfolgt, bei der ein größerer als sich aus der Bremspedalstellung ergebender Bremsdruck aufgebaut wird.

23. Bremssystem nach Anspruch 22, **dadurch gekennzeichnet, dass** beim Unterschreiten des vorgegebenen Wertes eine Vollbremsung erfolgt.

## Claims

1. Automatic brake system for motor vehicles with wheel brakes associated with the vehicle wheels and with an electronic control unit (6) to which is sent at least one first control signal of a device for sensing the decrease of an actuating force generated by the driver and acting on the accelerator pedal, gas throttle or twist grip throttle control of the motor vehicle, with means (8 or 21 - 29, 34 - 37) being provided which ensure pre-filling of the wheel brakes (10 - 13) when the first control signal appears,
**characterized in that** a second control signal is sent to the electronic control unit (6) which is produced by a device (30) that senses the point of time of contact of the driver foot with the brake pedal (4), and **in that** the pre-filling operation is interrupted in the absence of the second control signal.

2. Brake system as claimed in claim 1,
**characterized in that** the first control signals represents the load condition of the vehicle engine.

3. Brake system as claimed in claim 2,
**characterized in that** the first control signal represents the drop of the rotational speed of the engine.

4. Brake system as claimed in claim 2,
**characterized in that** the first control signal represents the speed of the movement of the accelerator pedal which occurs upon decrease of the actuating force.

5. Brake system as claimed in claim 4,
**characterized in that** the first control signal is produced by a control device of a programmed automatic transmission.

6. Brake system as claimed in claim 2,
**characterized in that** the first control signal represents a change of the pressure prevailing in the suction pipe of the engine.

7. Brake system as claimed in claim 2,
**characterized in that** the first control signal represents a change of a counterpressure prevailing in an exhaust gas system.

8. Brake system as claimed in claim 2,
**characterized in that** the first control signal is derived from a performance graph stored in a control device of a fuel injection system.

9. Brake system as claimed in claim 2,
**characterized in that** the first control signal is derived from a performance graph stored in a control device of the engine ignition.

10. Brake system as claimed in claim 8,
**characterized in that** the fuel injection interruption signal is used as the first control signal.

11. Brake system as claimed in claim 9,
**characterized in that** a signal representative of a change of the advance angle is used as the first control signal.

12. Brake system as claimed in claim 3,
**characterized in that** the first control signal is produced by a crankshaft rotational speed sensor (22).

13. Brake system as claimed in claim 6,
**characterized in that** the first control signal is produced by a charging pressure sensor (25).

14. Brake system as claimed in claim 6,
**characterized in that** the first control signal is produced by a pressure sensor (26) cooperating preferably with an ignition control device.

15. Brake system as claimed in claim 3,
**characterized in that** the first control signal is produced by a throttle valve sensor or switch (21, 21a) which senses displacements of the throttle valve of the vehicle engine.

16. Brake system as claimed in claim 3,
**characterized in that** the first control signal is produced by an idle switch (36) associated with a fuel injection pump.

17. Brake system as claimed in any one of the preceding claims,
**characterized in that** the brake system is configured as a hydraulic brake system, and **in that** the means for prefilling the wheel brakes is a hydraulic pre-charging pump.

18. Brake system as claimed in any one of the preceding claims,
**characterized in that** the brake system is configured as a hydraulic brake system, and **in that** the means for prefilling the wheel brakes (10 - 13) is a brake booster (2) that can be actuated irrespective of the driver's will.

19. Brake system as claimed in claim 18,
**characterized in that** the brake booster is configured as a vacuum brake booster (2) whose control valve (19) is operable electromechanically.

20. Brake system as claimed in any one of the preceding claims,
**characterized in that** a means (33) is provided sensing the time between the commencement of the prefilling operation and the appearance of the second control signal and comparing the sensed value with a predetermined value.

21. Brake system as claimed in claim 20,
**characterized in that** the prefilling operation is interrupted when the predetermined value is exceeded.

22. Brake system as claimed in claim 20,
**characterized in that** when the sensed value falls below the predetermined value, a quick pressure increase takes place, and brake pressure is built up which is higher than the brake pressure that results from the brake pedal position.

23. Brake system as claimed in claim 22,
**characterized in that** full braking is executed when the sensed value falls below the predetermined value.

## Revendications

1. Système de freinage automatique comportant des freins de roue associés aux roues du véhicule ainsi qu'une unité de commande électronique (6) à laquelle est amené au moins un premier signal de commande d'un dispositif de détection de la suppression de la force d'actionnement appliquée par le conducteur et agissant sur la pédale, le levier ou la poignée tournante de l'accélérateur du véhicule automobile, des moyens (8 ou 21 à 29, 34 à 37) étant prévus qui à l'apparition du premier signal de commande garantissent un pré-remplissage des freins de roue (10 à 13), **caractérisé en ce qu'**à l'unité de commande électronique (6) est amené un deuxième signal de commande qui est produit par un dispositif (30) lequel détecte l'instant du contact entre le pied du conducteur et la pédale de frein (4), et **en ce qu'**en cas d'absence du deuxième signal de commande le pré-remplissage est interrompu.

2. Système de freinage selon la revendication 1, **caractérisé en ce que** le premier signal de commande représente l'état de charge du moteur du véhicule.

3. Système de freinage selon la revendication 2, **caractérisé en ce que** le premier signal de commande représente la réduction de la vitesse de rotation du moteur.

4. Système de freinage selon la revendication 2, **caractérisé en ce que** le premier signal de commande représente la vitesse du mouvement de la pédale de frein qui se produit lorsque la force d'actionnement est supprimée.

5. Système de freinage selon la revendication 4, **caractérisé en ce que** le premier signal de commande est produit par un appareil de commande d'une boîte de vitesses automatique commandée par programme.

6. Système de freinage selon la revendication 2, **caractérisé en ce que** le premier signal de commande représente une variation de la pression régnant dans le tube d'aspiration du moteur.

7. Système de freinage selon la revendication 2, **caractérisé en ce que** le premier signal de commande représente une variation d'une contre-pression régnant dans un système d'échappement des gaz.

8. Système de freinage selon la revendication 2, **caractérisé en ce que** le premier signal de commande est dérivé d'un ensemble de courbes caractéristiques enregistré dans un appareil de commande d'une installation d'injection de carburant.

9. Système de freinage selon la revendication 2, **caractérisé en ce que** le premier signal de commande est dérivé d'un ensemble de courbes caractéristiques enregistré dans un appareil de commande de l'allumage du moteur.

10. Système de freinage selon la revendication 8, **caractérisé en ce qu'**on utilise comme premier signal de commande le signal d'interruption d'injection du carburant.

11. Système de freinage selon la revendication 9, **caractérisé en ce qu'**on utilise comme premier signal de commande un signal représentant une variation de l'angle d'allumage.

12. Système de freinage selon la revendication 3, **caractérisé en ce que** le premier signal de commande est produit par un capteur (22) de la vitesse de rotation du vilebrequin.

13. Système de freinage selon la revendication 6, **caractérisé en ce que** le premier signal de commande est produit par un capteur de pression de charge (25).

14. Système de freinage selon la revendication 6, **caractérisé en ce que** le premier signal de commande est produit par un capteur de pression (26) coopérant de préférence avec un appareil de commande d'allumage.

15. Système de freinage selon la revendication 3, **caractérisé en ce que** le premier signal de commande est produit par un capteur ou commutateur de clapet d'étranglement (21, 21a) qui détecte les déplacements du clapet d'étranglement du moteur du véhicule.

16. Système de freinage selon la revendication 3, **caractérisé en ce que** le premier signal de commande est produit par un interrupteur de ralenti (36) associé à une pompe d'injection de carburant.

17. Système de freinage selon l'une des revendications précédentes, **caractérisé en ce que** le système de freinage est conçu comme système de freinage hydraulique et **en ce que** les moyens de pré-remplissage des freins des roues sont formés par une pompe hydraulique de pré-charge.

18. Système de freinage selon l'une des revendications précédentes, **caractérisé en ce que** le système de freinage est conçu comme système de freinage hydraulique et **en ce que** les moyens de pré-remplissage des freins de roue (10 à 13) sont formés par un servofrein (2) pouvant être commandé indépendamment de la volonté du conducteur.

19. Système de freinage selon la revendication 18, **caractérisé en ce que** le servofrein est conçu comme servofrein à dépression (2) dont la soupape de commande (19) peut être actionnée de façon électromécanique.

20. Système de freinage selon l'une des revendications précédentes, **caractérisé en ce que** sont prévus des moyens (33) qui détectent la durée s'écoulant entre le début du pré-remplissage et l'apparition du deuxième signal de commande et qui comparent la valeur relevée à une valeur prédéfinie.

21. Système de freinage selon la revendication 20, **caractérisé en ce que** le pré-remplissage est interrompu en cas de dépassement de la valeur prédéfinie.

22. Système de freinage selon la revendication 20, **caractérisé en ce qu'**en cas de franchissement vers le bas de la valeur prédéfinie il se produit une augmentation rapide de la pression par laquelle il se constitue une pression de freinage supérieure à celle résultant de la position de la pédale de frein.

23. Système de freinage selon la revendication 22, **caractérisé en ce qu'**il se produit un freinage complet en cas de dépassement de la valeur prédéfinie.
